# EUROPÄISCHE PATENTSCHRIFT

(11) **EP 0 691 727 B1**
(45) Veröffentlichungstag und Bekanntmachung des Hinweises auf die Patenterteilung: **13.05.1998**
(21) Anmeldenummer: 95201772.1
(22) Anmeldetag: 29.06.1995
(51) Int. Cl.: H02K 1/27, H02K 21/14

(54) **Mittels Permanentmagneten erregbarer elektrischer Motor, insbesondere Innenläufer- oder Aussenläufermotor**
Electric motor excited by the use of permanent magnets, particularly for inner rotor or outer rotor motor
Moteur électrique excité par l'utilisation d'aimants permanents, notamment pour un moteur à rotor intérieur ou à rotor extérieur

(30) Priorität: 06.07.1994 DE 4423620
(43) Veröffentlichungstag der Anmeldung: 10.01.1996
(73) Patentinhaber: Philips Patentverwaltung GmbH, 22335 Hamburg (DE); Philips Electronics N.V., 5621 BA Eindhoven (NL)
(72) Erfinder: Ackermann, Bernd, Dr., c/o Philips, 22335 Hamburg (DE)
(74) Vertreter: von Laue, Hanns-Ulrich, Dipl.-Ing.

(56) Entgegenhaltungen:
- EP-A- 0 341 630
- EP-A- 0 598 137
- PATENT ABSTRACTS OF JAPAN vol. 11 no. 36 (E-477) [2483], 3. Februar 1987 & JP-A-61 203853 (SANYO ELECTRIC CO LTD) 9 September 1986

## Beschreibung

Die Erfindung bezieht sich auf einen mittels Permanentmagneten erregbaren elektrischen Motor, insbesondere Innenläufer- oder Außenläufermotor, mit gegeneinander bewegbaren Motorteilen, von denen das eine Motorteil in einem Luftspalt mittels Permanentmagneten ein mehrpoliges Erregerfeld ausbildet und das andere Motorteil eine in diesem Luftspalt befindliche Spulenkonfiguration aufweist, die frei von weichmagnetischem Material ist, wobei das dauermagnetisch erregte Motorteil aus einem zylindrischen Joch besteht, das mit gleichmäßig über den Umfang verteilten, im wesentlichen radialen Schlitzen versehen ist, in denen Permanentmagnete angeordnet sind, die in Umfangsrichtung magnetisiert sind mit von Magnet zu Magnet wechselnder Magnetisierungsrichtung.

Die Erzeugung mehrpoliger Magnetfelder ist eine der wichtigsten technischen Anwendungen von Permanentmagneten, wobei die überwiegende Mehrzahl dieser Komponenten in permanentmagnetisch erregten Motoren eingesetzt wird. Bezüglich der Form dieser Komponenten gibt es verschiedene Ausführungsformen. Die wichtigsten sind rotationssymetrische Scheiben, die ein mehrpoliges Magnetfeld in axialer Richtung erzeugen, Quader, die ein mehrpoliges Feld senkrecht zu einer ihrer Oberflächen erzeugen, und Zylinder bzw. Hohlzylinder, die ein mehrpoliges Magnetfeld in radialer Richtung erzeugen.

Aus der DE 36 07 648 C2 ist ein Motor bekannt, bei dem permanentmagnetische Kreisringsegmente auf einer Eisenhülse angeordnet sind, die in dieser Bauart einen zylinderförmigen Dauermagnetrotor bilden. Die Dauermagnete sind so magnetisiert, daß jeweils ein Nordpol in Richtung Luftspalt auf einen Südpol folgt. Der Rotor wird von einem zylinderförmigen Stator umgeben, der keine Wicklungsnuten enthält. Die Wicklung ist im Luftspalt zwischen dem Dauermagnetrotor und einer weichmagnetischen Statorhülse angeordnet.

Berücksichtigt man nur die Materialien, die zur Zeit in großen Mengen verwendet werden, so können diese Segmente zum einen aus Ferriten hergestellt werden, die kostengünstig sind, aber relativ schwache Magnetfelder erzeugen, und zum anderen aus Seltene-Erden-Materialien, die mit hohen Materialkosten verbunden sind, aber sehr starke Magnetfelder erzeugen.

Für beide Materialgruppen ist zu unterscheiden zwischen gesinterten und plastikgebundenen Materialen. Die gesinterten Materialien sind anisotrop, weshalb die von ihnen erzeugten Magnetfelder größer sind als die der isotropen plastikgebundenen Materialien. Der Nachteil der gesinterten Materalien ist, daß sie nur in einfachen Formen hergestellt werden können und die Anisotropie relativ zu diesen Formen nur in wenige, durch die physikalischen Eigenschaften vorgegebene Richtungen zeigen kann. Dementsprechend können auch nur einfache Magnetisierungsmuster erzeugt werden. Weiter ist es sehr aufwendig, gesinterte Magnete mit engen Toleranzen der mechanischen Abmessungen herzustellen. Dem stehen als Vorteile der plastikgebundenen Materialien gegenüber die Möglichkeit, Komponenten mit komplizierten Geometrien und engen mechanischen Toleranzen kostengünstig zu fertigen und durch einen entsprechenden Magnetisierungsprozeß auch komplizierte Magnetisierungsmuster im Material zu erzeugen.

Bei der Erzeugung radialer mehrpoliger Magnetfelder besteht nun die Schwierigkeit, daß es zur Zeit nicht möglich ist, in einem industriellen Prozeß Zylinder, bzw. Hohlzylinder mit radialer Anisotropie herzustellen. Es können zwar Zylinder bzw. Hohlzylinder mit diametraler Anisotropie hergestellt werden, diese eignen sich aber nur zur Erzeugung zweipoliger Magnetfelder; sie sind deshalb für Anwendungen, in denen Magnetfelder mit größerer Polzahl benötigt werden, nicht geeignet.

Die Herstellung der Rotoren, die in der DE 36 07 648 C2 beschrieben werden, ist aufwendig, weil die permanentmagnetischen Kreisringsegmente jeder für sich auf die Rotorhülse aufgeklebt werden müssen. Um einen sicheren Betrieb zu gewährleisten, muß der Rotor bandagiert werden. Es können große Magnetfelder realisiert werden, wenn die Magnetsegmente aus anisotropem Material hergestellt werden. Die Herstellung der Kreisringsegmente aus anisotropem Material erfordert jedoch selbst bereits einen sehr großen Aufwand.

Aus der DE-A-42 16 938 (PHD 92-057 EP) ist ein permanentmagnetischer Rotor bekannt, der aus einem Eisenjoch besteht, das mit radialen Schlitzen versehen ist, in die quaderförmige Permanentmagnete eingesetzt sind. Diese Permanentmagnete sind in Umfangsrichtung magnetisiert und haben in Umfangsrichtung von Magnet zu Magnet eine wechselnde Magnetisierungsrichtung. Diese Rotoren sind einfacher zu fertigen als die aus der DE 36 07 648 C2 bekannten Rotoren. Es ist unproblematisch die Quader in die Nuten zu kleben. Eine weitere, zusätzliche Fixierung ist nicht erforderlich. Die quaderförmigen Permanentmagnete können wegen ihrer einfachen Geometrie auf einfache Weise aus anisotropem Material hergestellt und anschließend magnetisiert werden, so daß große Magnetfelder erzeugt werden können.

Es ist Aufgabe der Erfindung, einen Rotor der eingangs erwähnten Art für einen elektrischen Motor zu schaffen, der gegenüber den bekannten Ausführungen ein deutlich größeres Magnetfeld im Luftspalt erzeugt, um so bei gegebenem Strom in der Spulenkonfiguration ein größeres Drehmoment zu erreichen.

Die gestellte Aufgabe ist gemäß der Erfindung dadurch gelöst, daß das zylindrische Joch aus isotropem Permanentmagnetmaterial besteht, das in den Jochabschnitten zwischen den Permanentmagneten in den Schlitzen überwiegend so radial magnetisiert ist, daß das dadurch am Luftspalt erzeugte Magnetfeld dieselbe Polarität wie das von den Permanentmagneten in den Schlitzen erzeugte Magnetfeld hat, und daß die Permanentmagnete in den Schlitzen aus anisotropem Permanentmagnetmaterial bestehen.

Auf diese Weise wird erreicht, daß das Joch aktiv zur Erzeugung des mehrpoligen Magnetfeldes beträgt.

Nach einer weiteren Ausgestaltung der Erfindung ist vorgesehen, daß die Schlitzen eine Neigung zwischen -30° und +30° gegenüber der radialen Richtung aufweisen. Durch Variation dieser Neigung kann man den Verlauf des Magnetfeldes im Luftspalt und damit der in der Spulenkonfiguration induzierten Spannung an applikationsspezifische Anforderungen anpassen.

Nach einer weiteren Ausgestaltung der Erfindung ist vorgesehen, daß die Spulenkonfiguration aus gebogenen Folienwicklungen besteht. Bei flacher Bauweise wird damit ein hoher Kupferfüllfaktor erreicht.

Nach einer weiteren Ausgestaltung der Erfindung ist vorgesehen, daß die Spulenkonfiguration aus gebogenen, vorgeformten gewickelten Spulen besteht. Eine solche Spulenkonfiguration läßt sich wirtschaftlich herstellen.

Nach einer weiteren Ausgestaltung der Erfindung ist vorgesehen, daß sich auf der Seite des Luftspaltes, die dem Permanentmagneten gegenüber liegt, hinter der Spulenkonfiguration ein zylindrisches Joch aus weichmagnetischem Material befindet, das fest mit der Spulenkonfiguration verbunden ist.

Nach einer weiteren Ausgestaltung der Erfindung ist vorgesehen, daß sich auf der Seite des Luftspaltes, die dem Permanentmagneten gegenüber liegt, hinter der Spulenkonfiguration ein zylindrisches Joch aus weichmagnetischem Material befindet, das fest mit dem Permanentmagneten verbunden ist. Dies hat den Vorteil, daß der Rotor im zylindrischen Joch keine Wechselfelder mehr erzeugt, weshalb keine Eisenverluste mehr auftreten.

Die Erfindung wird anhand der Zeichnung näher erläutert. Es zeigen:
Fig.1 ein Anwendungsbeispiel anhand eines Spindelmotors mit zylindrischem Rotor,
Fig.2 einen Schnitt durch den Rotor mit in radiale Schlitze eingesetzten Permanentmagneten,
Fig.3 einen Schnitt durch den Rotor mit Permanentmagneten, die in Schlitze eingesetzt sind, die zur radialen Richtung geneigt sind.

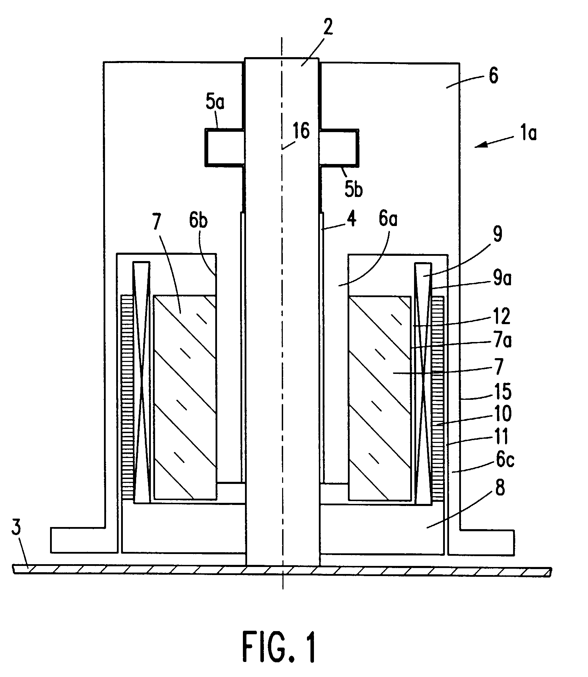

Fig. 1 zeigt im Schnitt einen Spindelmotor 1a, der insbesondere als Antriebsmotor für Festplatte in Datenverarbeitungsmaschinen vorgesehen ist. Eine Motorachse 2 dieses Spindelmotors 1a ist mit einer Platte 3 eines nicht dargestellten Festplattengehäuses fest verbunden. Lager 4, 5a und 5b lagern an der Motorachse 2 eine umlauffähige Nabe 6. Die Nabe 6 hat einen die Motorachse 2 umschließenden inneren Nabenteil 6a, auf dem an seiner Außenseite 6b ein permanentmagnetischer, zylinderförmiger Rotormagnet 7 befestigt ist. Das vom Rotormagneten 7 erzeugte, an dessen Außenseite 7a befindliche Feld steht senkrecht zur Drehachse 16. An der Motorachse 2 ist eine Trägerplatte 8 angeordnet. Diese trägt außenseitig eine zum Motor gehörige Spulenkonfiguration 9 und ein Joch 10. Die Nabe 6 weist weiterhin einen äußeren Nabenteil 6c auf, der seinerseits das Joch 10 umschließt.

Die Spulenkonfiguration 9 kann aus einer gebogenen Folienwicklung bestehen oder aus gebogenen, vorgeformten gewickelten Spulen. Die Trägerplatte 8 trägt bei diesem Motoraufbau auf der Außenseite 9a der Spulenkonfiguration 9 das mantelförmige Joch 10 aus weichmagnetischem Material. Bei diesem Aufbau bilden sich zwei Luftspalte 11 und 12 aus, von denen der eine Luftspalt 11 das Joch 10 von der Nabe 6 und der andere Luftspalt 12 den Rotormagneten 7 von der Spulenkonfiguration 9 trennt.

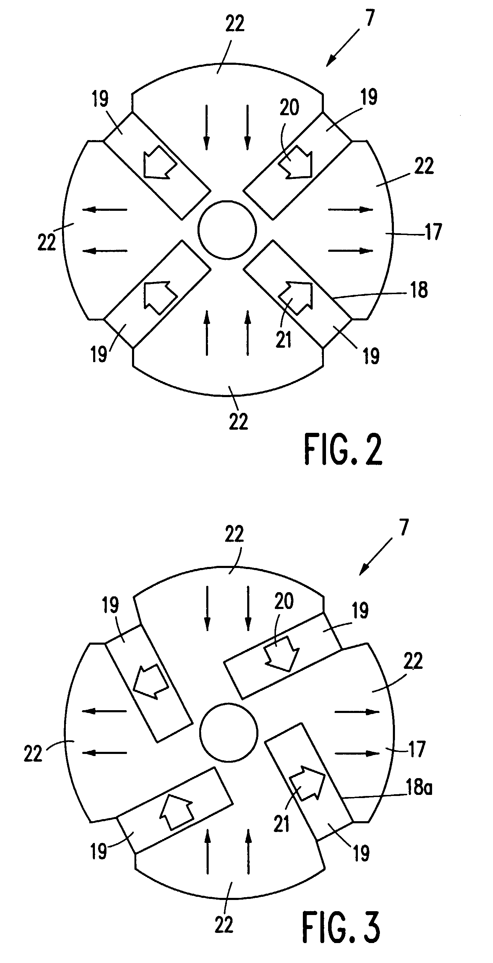

Fig. 2 zeigt einen Schnitt durch den permanentmagnetischen Rotormagneten 7. Dieser Rotor besteht aus einem zylindrischen Joch 17 aus isotropem Magnetmaterial, das mit radialen Schlitzen 18 versehen ist, in die quaderförmige Permanentmagnete 19 aus anisotropem Material eingesetzt sind. Diese Permanentmagnete 19 sind in Umfangsrichtung magnetisiert und haben in Umfangsrichtung von Magnet zu Magnet eine wechselnde Magnetisierungsrichtung 20, 21. Das Joch 17 ist in den Abschnitten 22 zwischen den Permanentmagneten 19, die in die Schlitze 18 eingesetzt sind, überwiegend so radial magnetisiert, daß das dadurch am Luftspalt 11 erzeugte Magnetfeld dieselbe Polarität wie das von den Permanentmagneten 19, die in die Schlitze 18 eingesetzt sind, erzeugte Magnetfeld hat.

Fig. 3 ist eine Abwandlung der Ausführung nach Fig. 2, bei der die Schlitze 18a gegen die radiale Richtung um ca. 20° geneigt sind.

Entsprechend einer nicht dargestellten anderen Ausführungsform der Erfindung ist es auch möglich, daß sich auf der Seite des Luftspaltes, die dem Permanentmagneten 7 gegenüber liegt, hinter der Spulenkonfiguration 9 das zylindrische Joch 10 aus weichmagnetischem Material befindet, das fest mit dem Permanentmagneten 7 verbunden ist. Dies hat den Vorteil, daß der Rotor 6 im zylindrischen Joch keine Wechselfelder mehr erzeugt, weshalb keine Eisenverluste mehr auftreten.

## Patentansprüche

1. Mittels Permanentmagneten erregter elektrischer Motor, insbesondere Innenläufer- oder Außenläufermotor, mit gegeneinander bewegbaren Motorteilen (6, 8), von denen das eine Motorteil in einem Luftspalt mittels Permanentmagneten (7) ein mehrpoliges Erregerfeld ausbildet und das andere Motorteil eine Spulenkonfiguration (9) aufweist, wobei das dauermagnetisch erregte Motorteil aus einem zylindrischen Joch (17) besteht, das mit gleichmäßig über den Umfang verteilten, im wesentlichen radialen Schlitzen (18, 18a) versehen ist, in denen Permanentmagnete (19) angeordnet sind, die in Umfangsrichtung magnetisiert sind mit von Magnet zu Magnet wechselnder Magnetisierungsrichtung, dadurch gekennzeichnet, daß die Spulenkonfiguration frei von weichmagnetischem Material ist und sich im Luftspalt befindet, daß das zylindrische Joch (17) aus isotropem Permanentmagnetmaterial besteht, das in den Jochabschnitten (22) zwischen den Permanentmagneten (19) in den Schlitzen (18, 18a) überwiegend so radial magnetisiert ist, daß das dadurch am Luftspalt (12) erzeugte Magnetfeld dieselbe Polarität wie das von den Permanentmagneten (19) in den Schlitzen (18, 18a) erzeugte Magnetfeld hat, und daß die Permanentmagnete (19) in den Schlitzen (18, 18a) aus anisotropem Permanentmagnetmaterial bestehen.

2. Elektrischer Motor nach Anspruch 1, dadurch gekennzeichnet, daß die Schlitze (18, 18a) eine Neigung zwischen -30° und +30° gegenüber der radialen Richtung aufweisen.

3. Elektrischer Motor nach einem der Ansprüche 1 oder 2, dadurch gekennzeichnet, daß die Spulenkonfiguration (9) aus gebogenen Folienwicklungen besteht.

4. Elektrischer Motor nach einem der Ansprüche 1 oder 2, dadurch gekennzeichnet, daß die Spulenkonfiguration (9) aus gebogenen, vorgeformten gewickelten Spulen besteht.

5. Elektrischer Motor nach einem der Ansprüche 3 oder 4, dadurch gekennzeichnet, daß sich auf der Seite des Luftspaltes, die dem Permanentmagneten gegenüber liegt, hinter der Spulenkonfiguration (9) ein zylindrisches Joch (10) aus weichmagnetischem Material befindet, das fest mit der Spulenkonfiguration (9) verbunden ist.

6. Elektrischer Motor nach einem der Ansprüche 3 oder 4, dadurch gekennzeichnet, daß sich auf der Seite des Luftspaltes, die dem Permanentmagneten gegenüber liegt, hinter der Spulenkonfiguration (9) ein zylindrisches Joch (10) aus weichmagnetischem Material befindet, das fest mit dem Permanentmagneten (7) verbunden ist.

## Claims

1. An electric motor with permanent-magnet excitation, particularly an inner-rotor or outer-rotor motor, having motor parts (6, 8) which are movable relative to one another, of which one motor part forms a multi-pole excitation field in an air gap (11) by means of permanent magnets (7) and the other motor part comprises a coil configuration (9), the permanent-magnetically excited motor part comprising a cylindrical yoke (17) having substantially radial slots (18, 18a), which are uniformly spaced along the circumference and in which permanent magnets (19) are mounted, which permanent magnets are magnetized in a circumferential direction with directions of magnetization which change from magnet to magnet, characterized in that the coil configuration is free from soft-magnetic material and is disposed in the air gap, the cylindrical yoke (17) consists of an isotropic permanent-magnet material which in yoke portions (22) between the permanent magnets (19) in the slots (18, 18a) is predominantly radially magnetized in such a manner that the resulting magnetic field produced in the air gap (12) has the same polarity as the magnetic field produced by the permanent magnets (19) in the slots (18, 18a), and the permanent magnets (19) in the slots (18, 18a) consist of an anisotropic permanent-magnet material.

2. An electric motor as claimed in Claim 1, characterized in that the slots (18, 18a) have an inclination between -30° and +30° relative to the radial direction.

3. An electric motor as claimed in Claim 1 or 2, characterized in that the coil configuration (9) consists of curved foil windings.

4. An electric motor as claimed in Claim 1 or 2, characterized in that the coil configuration (9) consists of curved preformed wound coils.

5. An electric motor as claimed in Claim 3 or 4, characterized in that a cylindrical yoke (10) of a soft-magnetic material is disposed at the side of the air gap which faces the permanent magnet, behind the coil configuration (9), which yoke is fixedly connected to the coil configuration (9).

6. An electric motor as claimed in Claim 3 or 4, characterized in that a cylindrical yoke (10) of a soft-magnetic material is disposed at the side of the air gap which faces the permanent magnet, behind the coil configuration (9), which yoke is fixedly connected to the permanent magnet (7).

## Revendications

1. Moteur électrique excité à l'aide d'aimants permanents, en particulier moteur à rotor interne ou à rotor externe, avec des pièces de moteur réciproquement mobiles (6, 8) dont l'une des pièces de moteur forme un champ d'excitation multipolaire dans un entrefer à l'aide d'aimants permanents (7) et l'autre pièce de moteur présente une configuration de bobines (9), la partie de moteur excitée par aimants permanents se composant d'une culasse cylindrique (17) qui est dotée de fentes (18, 18a) essentiellement radiales réparties uniformément sur sa périphérie dans lesquelles sont disposés des aimants permanents (19) qui sont magnétisés dans la direction périphérique avec une direction de magnétisation alternée d'un aimant à l'autre,
caractérisé en ce que la configuration de bobines est exempte de matériau magnétique doux et se trouve dans l'entrefer, en ce que la culasse cylindrique (17) se compose d'un matériau isotrope d'aimant permanent qui est magnétisé dans une direction principalement radiale dans les sections de culasse (22) entre les aimants permanents (19) dans les fentes (18, 18a) de telle sorte que le champ magnétique ainsi produit à l'entrefer (12) présente la même polarité que celui du champ magnétique produit par les aimants permanents (19) dans les fentes (18, 18a) et que les aimants permanents (19) dans les fentes (18, 18a) se composent d'un matériau anisotrope à aimant permanent.

2. Moteur électrique selon la revendication 1, caractérisé en ce que les fentes (18, 18a) présentent une inclinaison de -30° à +30° par rapport à la direction radiale.

3. Moteur électrique selon l'une des revendications 1 ou 2, caractérisé en ce que la configuration de bobines (9) se compose d'enroulements en feuilles coudées.

4. Moteur électrique selon l'une des revendications 1 ou 2, caractérisé en ce que la configuration de bobines (9) se compose de bobines enroulées préformées coudées.

5. Moteur électrique selon l'une des revendications 3 ou 4, caractérisé en ce qu'une culasse cylindrique (10) en matériau magnétique doux qui est fixée rigidement à la configuration de bobines (9) se trouve derrière la configuration de bobines (9) du côté de l'entrefer opposé à l'aimant permanent.

6. Moteur électrique selon l'une des revendications 3 ou 4, caractérisé en ce qu'une culasse cylindrique (10) en matériau magnétique doux qui est fixée rigidement à l'aimant permanent (7) se trouve derrière la configuration de bobines (9) du côté de l'entrefer opposé à l'aimant permanent.
